(19) Europäisches Patentamt
European Patent Office
Office européen des brevets

(11) EP 4 726 160 A1

(12) EUROPEAN PATENT APPLICATION
published in accordance with Art. 153(4) EPC

(43) Date of publication:
15.04.2026 Bulletin 2026/16

(51) International Patent Classification (IPC):
E05F 15/689 (2015.01)      H02P 29/00 (2016.01)
E05F 15/697 (2015.01)      E05F 15/70 (2015.01)

(21) Application number: 23944943.2

(22) Date of filing: 11.12.2023

(86) International application number:
PCT/CN2023/137816

(87) International publication number:
WO 2025/010938 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.07.2023  CN 202310854496

(71) Applicant: Beijing Jingwei Hirain Technologies
Co., Inc.
Beijing 100015 (CN)

(72) Inventors:
• JIA, Sheng
  Beijing 100015 (CN)
• CAO, Hongbin
  Beijing 100015 (CN)
• LIU, Yanzhao
  Beijing 100015 (CN)
• GU, Junfa
  Beijing 100015 (CN)

(74) Representative: Kraus & Lederer PartGmbB
Thomas-Wimmer-Ring 15
80539 München (DE)

(54) **VEHICLE WINDOW POSITION COMPENSATION METHOD AND APPARATUS, DEVICE, MEDIUM, AND PROGRAM PRODUCT**

(57) A vehicle window position compensation method and apparatus, a device, a medium, and a program product. The method comprises: acquiring a first current and a first rotation speed when a motor is shut down, a first time period from the time at which the motor is shut down to the time at which the motor stops rotating, and a second current of the motor within the first time period; on the basis of the first current, the first rotation speed, the first time period, the second current, and a kinematic model of the motor, calculating an overshoot distance of the motor; and obtaining a target position of the vehicle window on the basis of the overshoot distance and a first position of the vehicle window when the motor is shut down.

acquiring a first current and a first rotation speed of a motor controlling a vehicle window movement at the time of de-energization of the motor, a first time period of the motor from the de-energization to a complete stop of rotation of the motor, and a second current of the motor during the first time period — Step 110

calculating a coasting distance of the motor based on the first current, the first rotation speed, the first time period, the second current, and a kinematics model of the motor; — Step 120

obtaining a target position of the vehicle window based on the coasting distance and a first position of the vehicle window at the time of the de-energization of the motor — Step 130

**Fig. 1**

**Description**

**CROSS-REFERENCE TO RELATED APPLICATION**

The present disclosure claims priority to Chinese Patent Application No. 202310854496.8 entitled "VEHICLE WINDOW POSITION COMPENSATION METHOD AND APPARATUS" filed on July 12, 2023, which is incorporated herein by reference in its entirety.

**TECHNICAL FIELD**

The present disclosure relates to the technical field of vehicle window position controlling, and particularly, to a vehicle window position compensation method, an apparatus, a device, a medium, and a program product.

**BACKGROUND**

When the position of a vehicle window is adjusted, the motor of the vehicle window still rotates due to inertia after de-energization of the motor by the user. In this way, the vehicle window is driven to keep moving, so that the position of the vehicle window still changes, and the position where the vehicle window stops is not the position required by the user. For this reason, the position of the vehicle window should be compensated.

**SUMMARY**

Embodiments of the present disclosure provide a vehicle window position compensation method, including:

acquiring a first current and a first rotation speed of a motor controlling a vehicle window movement at the time of de-energization of the motor, a first time period from the de-energization to a complete stop of rotation of the motor, and a second current of the motor during the first time period;
calculating, based on the first current, the first rotation speed, the first time period, the second current, and a kinematics model of the motor, a coasting distance of the motor; and
obtaining, based on the coasting distance and a first position of the vehicle window at the time of de-energization of the motor, a target position of the vehicle window.

Embodiments of the present disclosure further provide a vehicle window compensation apparatus, comprising:

an acquisition module configured to a first current and a first rotation speed of a motor controlling a vehicle window movement at the time of de-energization of the motor, a first time period from the de-energization to a complete stop of rotation of the motor, and a second current of the motor during the first time period;
a calculation module configured to calculate, based on the first current, the first rotation speed, the first time period, the second current, and a kinematics model of the motor, a coasting distance of the motor; and
a determination module configured to obtain, based on the coasting distance and a first position of the vehicle window at the time of de-energization of the motor, a target position of the vehicle window.

Further, embodiments of the present disclosure further provide an electronic device, the electronic device includes a processor and a memory, the memory storing programs or instructions executable on the processor, and the programs or instructions, when executed by the processor, implementing steps of the vehicle window position compensation method of any of the embodiments of the present disclosure.
Further, embodiments of the present disclosure further provide a readable storage medium storing programs or instructions, and the programs or instructions, when executed by a processor, implement steps of the vehicle window position compensation method of any of the embodiments of the present disclosure.
Further, embodiments of the present disclosure further provide a computer program product, instructions in the computer program product is executed by a processor of an electronic device, so that the electronic device can execute steps of the vehicle window position compensation method of any of the embodiments of the present disclosure.

**BRIEF DESCRIPTION OF THE DRAWINGS**

Drawings herein are incorporated into and form a part of the detailed description, show embodiments fitting the present disclosure and are intended to explain principles of the present disclosure together with the detailed description, and do not improperly limit the present disclosure.

Fig. 1 is a schematic flowchart of a vehicle window position compensation method according to an embodiment of the present disclosure;

Fig. 2 is an architecture diagram of a vehicle window position compensation system for implementing a vehicle window position compensation method according to an embodiment of the present disclosure;

Fig. 3 is a schematic flowchart of a vehicle window position compensation method according to another embodiment of the present disclosure;

Fig. 4 is a schematic structural view of a vehicle window position compensation apparatus according to an embodiment of the present disclosure; and

Fig. 5 is a schematic structural view of an electronic device according to an embodiment of the present disclosure.

## DETAILED DESCRIPTION

In order to enable those skilled in the art to better understand technical solutions of the present disclosure, the technical solutions in embodiments of the present disclosure will be described clearly and completely below with reference to the drawings. It should be understood that specific embodiments described herein are merely intended to explain, rather than to limit, the present disclosure. For those skilled in the art, the present disclosure may be implemented without some of these specific details. The following description of the embodiments is only to provide a better understanding of the present disclosure by illustrating examples of the present disclosure.

It should be noted that the terms "first", "second", and the like in the detailed description, claims, and brief description of the drawings of the present disclosure are used for distinguishing similar objects and not necessarily for describing a specific order or priority in order. It should be understood that the data used in this manner may be interchangeable when appropriate, so that the embodiments of the present disclosure described herein can be implemented in other orders than those illustrated or described herein. Implementations described in the following exemplary embodiments do not represent all of the implementations consistent with the present disclosure. Rather, they are merely examples consistent with some aspects of the present disclosure as described in detail in the appended claims.

Before the technical solutions of the embodiments of the present disclosure are introduced, the background technology corresponding to the embodiments of the present disclosure is introduced first:

When the position of the vehicle window is adjusted, the motor of the vehicle window still rotates due to inertia after de-energization of the motor by the user. In this way, the vehicle window is driven to keep moving, so that the position of the vehicle window still changes after the de-energization of the motor controlling the vehicle window, and the position where the vehicle window stops is not the position required by the user. For this reason, the position of the vehicle window needs to be compensated. According to the existing vehicle window position compensation methods, the inertial coasting distance after the de-energization of the motor is estimated mainly based on the ripple pulse of the motor collected after the de-energization of the motor, or the inertial coasting distance after the de-energization of the motor is estimated based on the current value and the rotation speed value of the motor at the time of de-energization of the motor.

However, in the first manner above, since the motor has the irregularity in the ripple pulse in the process from de-energization to complete stop of rotation of the motor, the detection error is relatively great under a condition that the inertial coasting distance after the de-energization of the motor is estimated by the ripple pulse. In the second manner, the inertial coasting distance after the de-energization of the motor is estimated based on the corresponding relationship between the current value and the rotation speed value of the motor which are preset at the time of de-energization of the motor and the inertial coasting distance, so that there is a certain deviation. Therefore, in the related art, the estimation accuracy is low under a condition that the inertial coasting distance after the de-energization of the motor is estimated, that is, the position of the vehicle window compensated based on the above vehicle window position compensation methods has a certain deviation, and the accuracy of the determined compensation distance is low. In order to solve the above problems, embodiments of the present disclosure provide a vehicle window position compensation method, a vehicle window position compensation apparatus, a device, a medium, and a program product. Based on a first current and a first rotation speed at the time of de-energization of the motor controlling the vehicle window movement, a first time period of the motor from the de-energization to a complete stop of rotation of the motor, a second current of the motor in the first time period acquired, and a kinematics model of the motor, a coasting distance of the motor is calculated. The first position of the vehicle window at the time of de-energization of the motor is compensated based on the coasting distance to obtain a target position of the vehicle window. In this way, the braking coasting distance is accurately calculated, using these feature data such as the first current and the first speed when the motor is operating and the first time period of the braking process, so that the accuracy of compensating the target position of the vehicle window is improved, and the deviation between the target position of the vehicle window and the actual stop position is reduced.

In conjunction with the drawings, a vehicle window position compensation method according to embodiments of the present disclosure will be described in detail below with reference to specific embodiments and application scenarios thereof.

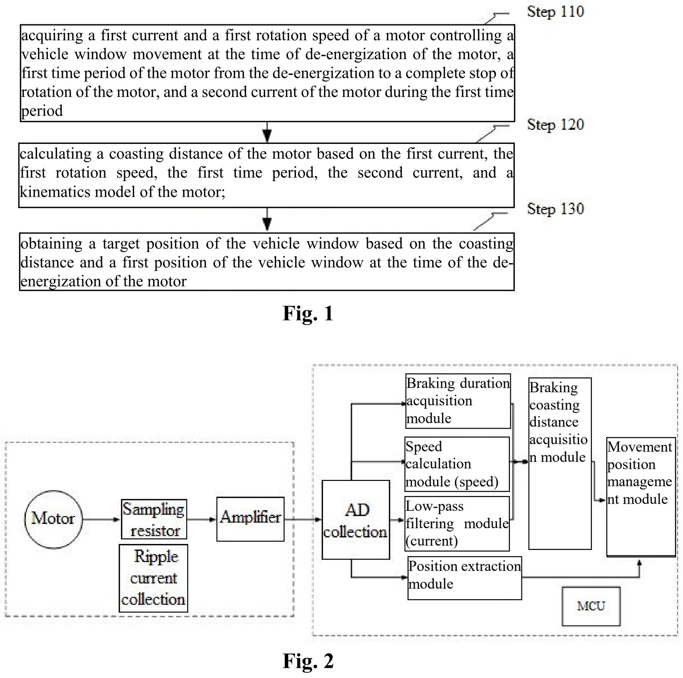

Fig. 1 is a schematic flowchart of a vehicle window position compensation method according to an embodiment of the present disclosure, and the execution subject of the vehicle window position compensation method may be a server. As shown in Fig. 1, the vehicle window position compensation method according to the embodiment of the present disclosure may include step 110 to step 130.

Step 110 comprises acquiring a first current and a first rotation speed of a motor controlling a vehicle window movement at the time of de-energization of the motor, a first time period from the de-energization to a complete stop of rotation of the motor, and a second current of the motor during the first time period.

The first current may be a current at a de-energization moment of the motor controlling the vehicle window movement.

The first rotation speed may be a rotation speed at the de-energization moment of the motor controlling the vehicle window movement.

The first time period may be a duration of the motor from the de-energization to the complete stop of rotation of the motor.

The second current may be a reverse current of the motor in the first time period.

Step 120 comprises calculating, based on the first current, the first rotation speed, the first time period, the second current, and a kinematics model of the motor, a coasting distance of the motor.

The coasting distance may be used to compensate the first position of the vehicle window at the time of de-energization of the motor.

In some embodiments of the present disclosure, the kinematics model of the motor may be represented according to the following formula (1):

$$\begin{cases} J\dfrac{d\omega}{dt} = T_m - T_f \\ T_m = K_t I \end{cases} \tag{1}$$

where $J$ represents the moment of inertia, $\omega$ is represents rotation speed prior to the de-energization of the motor, $T_m$ represents the driving torque of the motor, $T_f$ represents the resistance torque of the motor, $K_t$ represents the characteristic parameter of the motor, and $I$ represents the current prior to the de-energization of the motor.

In some embodiments of the present disclosure, the current and the rotation speed in the operation process of the motor may be monitored in real time, and at the moment of the de-energization of the motor, the current and the rotation speed of the motor, that is, the first current and the first rotation speed, may be acquired.

In some embodiments of the present disclosure, when the motor is braked, that is, in the process from the de-energization to the complete stop of rotation of the motor, under a condition that it is assumed that the motor operates at a uniform speed, the kinematics model of the motor in the formula (1) may be equivalent to the formula (2) given below.

$$\begin{cases} \dfrac{d\omega}{dt} = 0 \\ T_m = T_f \\ T_m = K_t I_{break} \\ T_f = K_t I_{break} \end{cases} \tag{2}$$

In some embodiments of the present disclosure, the calculating, based on the first current, the first rotation speed, the first time period, the second current, and the kinematics model of the motor, the coasting distance of the motor may specifically include:

calculating, based on the first current, the first rotation speed, the first time period, the second current, and the kinematics model of the motor, a second rotation speed in a process from the de-energization to the complete stop of rotation of the motor; and
obtaining, based on the second rotation speed, the coasting distance of the motor.

The second rotation speed may be a rotation speed in the process from the de-energization to the complete stop of rotation of the motor.

In some embodiments of the present disclosure, the calculating, based on the first current, the first rotation speed, the first time period, the second current, and the kinematics model of the motor, the second rotation speed in the process from the de-energization to the complete stop of rotation of the motor may specifically include:

calculating, based on the first current, the first rotation speed, the first time period, the second current, and the kinematics model of the motor, the second rotation speed in the process from the de-energization to the complete stop of rotation of the motor according to the following formula (3):

$$\begin{cases} k = \dfrac{T}{t_s} \\ J\dfrac{\omega_k - \omega_{k-1}}{t_s} = K_t I_k - \quad K_t I_{break} \\ \omega_k = \omega_{k-1} + \dfrac{K_t t_s}{J}\left(I_{zk} - I_{break}\right) \end{cases} \qquad (3)$$

where $\omega_k$ represents a second rotation speed corresponding to a k-th one of sampling points in the process from the de-energization to the complete stop of rotation of the motor, k = 1, 2, 3,..., n,

$\omega_{k-1}$ represents a second rotation speed corresponding to a (k-1)-th one of the sampling points in the process from the de-energization to the complete stop of rotation of the motor,

T represents the first time period,

$t_s$ represents a sampling time interval in the first time period,

$I_k$ represents a current corresponding to the k-th one of the sampling points prior to the de-energization of the motor,

$I_{break}$ represents the first current, and

$I_{zk}$ represents the second current at sampling moments in the first time period.

In some embodiments of the present disclosure, in the braking process, it may be assumed that the moment of resistance is constant, a discrete sampling may be performed on the first time period T of the braking and stopping process of the motor and the second current $I_z$ in this time period, the time interval of the discrete sampling may be $t_s$, and the discrete sampling points may be in the number of K, the second rotation speed $\omega_k$ in the process from the de-energization to the complete stop of rotation of the motor may be obtained according to the formula (3).

In some embodiments of the present disclosure, after the formula (3) is obtained, the following formula (4) may be obtained based on the recursion algorithm.

$$\begin{cases} \omega_k = \omega_{break} + \dfrac{t_s K_t}{J}\sum_{j=1}^{k} I_{zj} - k\dfrac{t_s K_t}{J} I_{break} \\ \omega_{k-1} = \omega_{break} + \dfrac{t_s K_t}{J}\sum_{j=1}^{k-1} I_{zj} - (k-1)\dfrac{t_s K_t}{J} I_{break} \end{cases} \qquad (4)$$

In some embodiments of the present disclosure, the obtaining, based on the second rotation speed, the coasting distance of the motor may specifically include:

obtaining, based on the second rotation speed, the coasting distance $\Delta S_k$ between $\omega_{k-1}$ and $\omega_k$ according to the following formula (5),

$$\Delta S_k = \frac{t_s(\omega_k + \omega_{k-1})}{2} \qquad (5)$$

obtaining, based on the coasting distance between $\omega_{k-1}$ and $\omega_k$, the coasting distance $S_k$ of the motor according to the formula (6):

$$S_k = k t_s \omega_{break} - \frac{t_s^2 K_t}{2J}\sum_{j=1}^{k}(2j-1)I_{break} + \frac{t_s^2 K_t}{J}\left(\sum_{i=2}^{k}\sum_{j=1}^{i-1} I_{zj} + \frac{\sum_{j=1}^{k} I_{zj}}{2}\right) \qquad (6)$$

where $w_{break}$ is the first rotation speed.

In the formula (6), A may be $t_s$, B may be $\dfrac{t_s{}^2 K_t}{2J}$, and C may be $\dfrac{t_s{}^2 K_t}{J}$, so that the formula (6) may be represented as the formula (7) given below.

$$S_k = Ak\omega_{break} - Bk^2 I_{break} + C\left[\left(\frac{1}{2}+(k-1)\right)I_{z1} + \left(\frac{1}{2}+(k-2)\right)I_{z2} + \cdots \frac{1}{2}I_{zk}\right] \tag{7}$$

Step 130 comprises obtaining, based on the coasting distance and the first position of the vehicle window at the time of de-energization of the motor, the target position of the vehicle window.

The first position may be the position of the vehicle window at the moment of the de-energization of the motor.

The target position may be a distance after the first distance is compensated based on the coasting distance, that is, the final stop position of the vehicle window after the motor finally stops rotating.

In some embodiments of the present disclosure, after the coasting distance is obtained, the first position of the vehicle window may be compensated using the coasting distance, and then the target position of the vehicle window may be obtained. Specifically, the sum of the coasting distance and the first position of the vehicle window at the time of de-energization of the motor may be determined as the target position of the vehicle window.

In some embodiments of the present disclosure, in order to accurately obtain the target position of the vehicle window, the acquiring the first rotation speed of the motor controlling a vehicle window movement at the time of de-energization of the motor in step 110 may specifically include:

  acquiring a second time period required for the motor controlling the vehicle window movement to rotate once in an operating state, and
  calculating, based on the second time period required for the motor to rotate once, the first rotation speed at the time of de-energization of the motor.

The second time period may be the length of time required for the motor to rotate once prior to the de-energization of the motor.

In some embodiments of the present disclosure, the second time period required for the motor to rotate once prior to the de-energization of the motor may be acquired, and then the rotation speed of the motor may be calculated based on the length of time required for the motor to rotate once.

In embodiments of the present disclosure, the second time period required for the motor controlling the vehicle window movement to rotate once in the operating state is acquired, and the first rotation speed at the time of de-energization of the motor may be accurately calculated based on the second time period required for the motor to rotate once.

In some embodiments of the present disclosure, the acquiring a first time period of a motor controlling a vehicle window movement at the time of de-energization of the motor in step 110 may specifically comprises:

  acquiring a sampling time interval of the motor controlling the vehicle window movement from the de-energization to the complete stop of rotation of the motor, and a number of sampling points sampled in the process of the motor from the de-energization to the complete stop of rotation of the motor; and
  calculating, based on the sampling time interval and the number of the sampling points, the first time period of the motor from the de-energization to the complete stop of rotation of the motor.

In some embodiments of the present disclosure, the sampling time interval of the motor controlling the vehicle window movement from the de-energization to the complete stop of rotation may be preset, then, the number of the sampling points sampled in the process from the de-energization to the complete stop of rotation of the motor may be acquired, and the first time period of the motor from the de-energization to the complete stop of rotation may be obtained based on the variant of the first formula in the formula (3).

In embodiments of the present disclosure, the sampling time interval of the motor controlling the vehicle window movement from the de-energization to the complete stop of rotation and the number of the sampling points sampled in the process from the de-energization to the complete stop of rotation of the motor are acquired, so that the first time period of the motor from the de-energization to the complete stop of rotation may be accurately calculated based on the sampling time interval and the number of the sampling points.

In some embodiments of the present disclosure, in order to accurately acquire the first current, the acquiring the first current of the motor controlling the vehicle window movement at the time of de-energization of the motor in step 110 may specifically include:

acquiring a ripple current signal of the motor controlling the vehicle window movement in an operating state;
converting the ripple current signal into a voltage signal;
performing an amplification process on the voltage signal to obtain an amplified voltage signal;
converting the amplified voltage signal into a digital signal;
performing a filtering process on a noise in the digital signal to obtain a filtered digital signal; and
obtaining, based on the filtered digital signal, the first current at the time of de-energization of the motor.

In some embodiments of the present disclosure, as shown in Fig. 2, in the rotation process of the motor, the ripple current signal of the motor in the operating state may be collected by an apparatus for collecting the ripple current; then, the ripple current signal generated in the movement process of the motor may be converted into the voltage signal by a sampling resistor; next, the amplification process is performed by an amplifier, the collecting is performed by an AD sampling interface to convert the voltage signal processed by the amplifier into the digital signal; the speed (the first rotation speed), the current (the first current and the second current) in the operation of the motor and the duration (the first time period) of the braking process of the motor are obtained by a speed calculation module, a low-pass filtering module, and a braking duration acquisition module, respectively, the position (the first position) of the vehicle window at the time of de-energization of the motor is extracted by a position extraction module; after that, the coasting distance when the motor is braked is obtained by a braking coasting distance acquisition module; finally, the accurate stop position after the motor is braked may be obtained by a movement position management module based on the first position and the coasting distance.

In some embodiments of the present disclosure, after the sampling interface converts the voltage signal processed by the amplifier into the digital signal, the high-frequency noise in the digital signal may be filtered out by the low-pass filtering module, and according to Ohm's law, the current signal that may be monitored is obtained based on the filtered digital signal; and the current signal may be monitored in real time and acquired in the movement process of the motor.

In the embodiments of the present disclosure, the ripple current signal of the motor controlling the vehicle window movement in the operating state is acquired, so that the ripple current signal is converted into the voltage signal, the amplification process is performed on the voltage signal to obtain the amplified voltage signal, the amplified voltage signal is converted into the digital signal, the filtering process is performed on the noise in the digital signal to obtain the filtered digital signal, and the first current at the time of de-energization of the motor is accurately obtained based on the filtered digital signal.

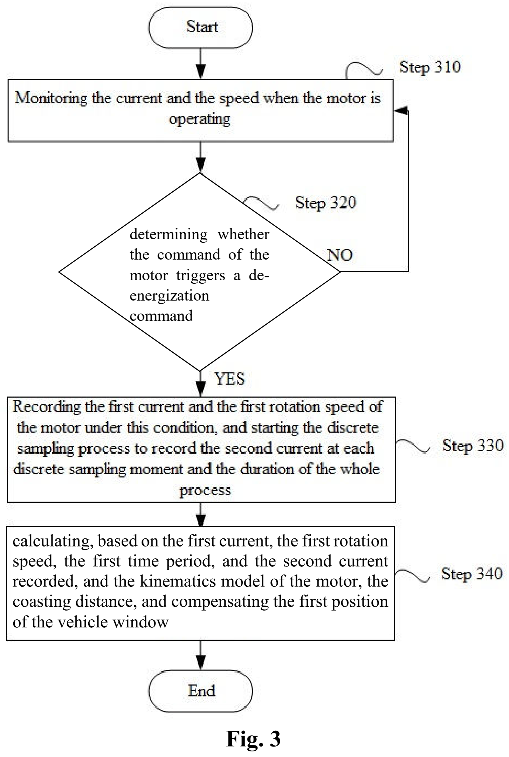

In some embodiments of the present disclosure, in order to more clearly understand the vehicle window position compensation method, another implementation mode of the vehicle window position compensation method is further provided. As shown in Fig. 3, the vehicle window position compensation method according to the embodiments of the present disclosure may include step 310 to step 340.

Step 310 comprises monitoring the current and the speed when the motor is operating.

Step 320 comprises determining whether the command of the motor triggers a de-energization command, under a condition that the command of the motor triggers the de-energization command, executing step 330, and under a condition that the command of the motor does not trigger the de-energization command, continuing to execute step 310.

Step 330 comprises recording the first current and the first rotation speed of the motor under this condition, and starting a discrete sampling process to record the second current at each discrete sampling moment and the duration of the whole process.

In some embodiments of the present disclosure, during the braking process of the motor, the duration of the whole braking process, that is, the first time period, may be recorded. The specific implementation of step 330 is the same the process of step 110 in the above embodiments, which is not repeated herein.

Step 340 comprises calculating, based on the first current, the first rotation speed, the first time period, and the second current recorded, and the kinematics model of the motor, the coasting distance, and compensating the first position of the vehicle window.

In step 340, the implementation process of this step is the same as the process of step 120 to step 130 in the above embodiments, which is not repeated herein.

In the embodiments of the present disclosure, the coasting distance of the motor is calculated based on the first current and the first rotation speed of the motor controlling the vehicle window movement at the time of the de-energization, the first time period of the motor from the de-energization to the complete stop of rotation, and the second current of the motor in the first time period. The first position of the vehicle window at the time of the de-energization of the motor is compensated with the coasting distance to obtain the target position of the vehicle window. In this way, the braking coasting distance is accurately calculated using the feature data such as the first current and the first speed when the motor is operating and the first time period of the braking process, so that the accuracy of compensating the target position of the vehicle window is improved, and the deviation between the target position of the vehicle window and the actual stop position is reduced. Further, since the feature data such as the first current and the first speed are acquired based on the actual condition of the vehicle window, the calculation of the coasting distance will not be wrong due to the deformation and aging of the rubber strip of the vehicle window, so that the structural effect on the vehicle window due to the deformation and aging of the rubber strip is reduced. In the related art, in the moving process of the vehicle window, under a condition that the user blocks the vehicle window from moving using his hand, continuous moving of the vehicle window may be blocked based on the anti-pinch function of the vehicle, and pinching of the user's hand is avoided. With the coasting distance calculated by the embodiments of the present disclosure, the stability of the anti-pinch position is improved, and the stability of the anti-pinch function is ensured.

It should be noted that the executing body of the vehicle window position compensation method according to the embodiments of the present disclosure may be a vehicle window position compensation apparatus or a control module for executing the vehicle window position compensation method in the vehicle window position compensation apparatus.

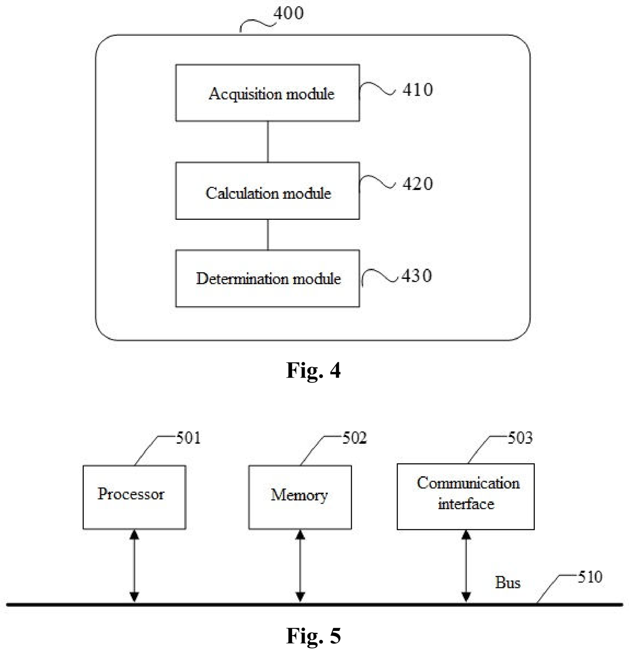

Based on the same inventive concept as the above vehicle window position compensation method, the present disclosure further provides a vehicle window position compensation apparatus. The vehicle window position compensation apparatus according to the embodiments of the present disclosure will be described in detail below with reference to Fig. 4.

Fig. 4 is a schematic structural view of a vehicle window position compensation apparatus shown according to an exemplary embodiment.

As shown in Fig. 4, the vehicle window position compensation apparatus 400 may include:

an acquisition module 410 configured to acquire a first current and a first rotation speed of a motor controlling a vehicle window movement at the time of de-energization of the motor, a first time period from the de-energization to a complete stop of rotation of the motor, and a second current of the motor during the first time period,
a calculation module 420 configured to calculate, based on the first current, the first rotation speed, the first time period, the second current, and a kinematics model of the motor, a coasting distance of the motor, and
a determination module 430 configured to obtain, based on the coasting distance and a first position of the vehicle window at the time of de-energization of the motor, a target position of the vehicle window.

In the embodiments of the present disclosure, the coasting distance of the motor is calculated based on the first current and the first rotation speed of the motor controlling the vehicle window movement at the de-energization, the first time period of the motor from the de-energization to the complete stop of rotation, the second current of the motor in the first time period acquired, and the kinematics model of the motor, and the first position of the vehicle window at the time of de-energization of the motor is compensated using the coasting distance to obtain the target position of the vehicle window. In this way, the braking coasting distance is accurately calculated using the feature data such as the first current and the first speed when the motor is operating and the first time period of the braking process, so that the accuracy of compensating the target position of the vehicle window is improved, and the deviation between the target position of the vehicle window and the actual stop position is reduced.

In some embodiments of the present disclosure, the kinematics model of the motor may be represented according to the following formula:

$$\begin{cases} J\dfrac{d\omega}{dt} = T_m - T_f \\ T_m = K_t I \end{cases}$$

where J represents the moment of inertia, $\omega$ represents the rotation speed prior to the de-energization of the motor, $T_m$ represents the driving torque of the motor, $T_f$ represents the resistance torque of the motor, $K_t$ represents the characteristic parameter of the motor, and I represents the current prior to the de-energization of the motor.

In some embodiments of the present disclosure, the calculation module 420 may specifically include:

a calculation unit configured to calculate, based on the first current, the first rotation speed, the first time period, the second current, and the kinematics model of the motor, the second rotation speed in the process from the de-energization to the complete stop of rotation of the motor, and
a determination unit configured to obtain, based on the second rotation speed, the coasting distance of the motor.

In some embodiments of the present disclosure, the calculation unit may be specifically configured to:

calculate, based on the first current, the first rotation speed, the first time period, the second current, and the kinematics model of the motor, the second rotation speed in the process from the de-energization to the complete stop of rotation of the motor according to the following formula:

$$\begin{cases} k = \dfrac{T}{t_s} \\ J\dfrac{\omega_k - \omega_{k-1}}{t_s} = K_t I_k - K_t I_{break} \\ \omega_k = \omega_{k-1} + \dfrac{K_t t_s}{J}\left(I_{zk} - I_{break}\right) \end{cases}$$

where $\omega_k$ represents the second rotation speed corresponding to the k-th sampling point in the process from the de-energization to the complete stop of rotation of the motor, k = 1, 2, 3,..., n,

$\omega_{k-1}$ represents the second rotation speed corresponding to the (k - 1)-th sampling point in the process from the de-energization to the complete stop of rotation of the motor,

T represents the first time period,

$t_s$ represents the sampling time interval in the first time period,

$I_k$ represents the current corresponding to the k-th sampling point prior to the de-energization of the motor,

$I_{break}$ represents the first current, and

$I_{zk}$ represents the second current at the sampling moments in the first time period.

In some embodiments of the present disclosure, the determination unit may be specifically configured to:

obtain, based on the second rotation speed, the coasting distance of the motor according to the following formula:

$$\triangle S_k = \frac{t_s(\omega_k + \omega_{k-1})}{2}$$

$$S_k = \sum_{j=1}^{k} \triangle S_j$$

$$S_k = kt_s\omega_{break} - \frac{t_s^2 K_t}{2J}\sum_{j=1}^{k}(2j - 1)I_{break} + \frac{t_s^2 K_t}{J}\left(\sum_{i=2}^{k}\sum_{j=1}^{i-1} I_{zj} + \frac{\sum_{j=1}^{k} I_{zj}}{2}\right)$$

where $S_k$ represents the coasting distance of the motor, $\triangle S_k$ represents the coasting distance of the motor between $\omega_k$ and $\omega_{k-1}$, and $w_{break}$ represents the first rotation speed.

In some embodiments of the present disclosure, the acquisition module 410 may be specifically configured to:

acquire the second time period required for the motor controlling the vehicle window movement to rotate once in the operating state, and

calculate, based on the second time period required for the motor to rotate once, the first rotation speed at the time of de-energization of the motor.

In some embodiments of the present disclosure, the acquisition module 410 may be specifically configured to:

acquire the sampling time interval of the motor controlling the vehicle window movement from the de-energization to the complete stop of rotation and the number of the sampling points sampled in the process from the de-energization to the complete stop of rotation of the motor, and

calculate, based on the sampling time interval and the number of the sampling points, the first time period of the motor from the de-energization to the complete stop of rotation.

In some embodiments of the present disclosure, the determination module 430 may be specifically configured to:

determine the sum of the coasting distance and the first position of the vehicle window at the time of de-energization of the motor as the target position of the vehicle window.

In some embodiments of the present disclosure, the acquisition module 410 may specifically be further configured to:

acquire a ripple current signal of the motor controlling the vehicle window movement in the operating state,
convert the ripple current signal into a voltage signal,
perform a amplification process on the voltage signal to obtain an amplified voltage signal,
convert the amplified voltage signal into a digital signal,
perform a filtering process on the noise in the digital signal to obtain a filtered digital signal, and
obtain, based on the filtered digital signal, the first current at the time of de-energization of the motor.

The vehicle window position compensation apparatus according to the embodiments of the present disclosure may be configured to execute the vehicle window position compensation method according to the above embodiments of the method, and the implementation principle and technical effect thereof are similar, which is not repeated here for the sake of brevity.

Based on the same inventive concept, embodiments of the present disclosure further provide an electronic device.

Fig. 5 is a schematic structural view of an electronic device according to embodiments of the present disclosure. As shown in Fig. 5, the electronic device may include a processor 501 and a memory 502 storing computer programs or instructions.

Specifically, the processor 501 may include a central processing unit (CPU), or an application specific integrated circuit (ASIC), or one or more integrated circuits that may be configured to implement the embodiments of the present disclosure.

The memory 502 may include a mass storage for data or instructions. By way of example and not limitation, the memory 502 may include a hard disk drive (HDD), a floppy disk drive, a flash memory, an optical disk, a magneto-optical disk, a magnetic tape, or a universal serial bus (USB) drive or a combination of two or more thereof. When appropriate, the memory 502 may include a removable or non-removable (or fixed) medium. When appropriate, the memory 502 may be internal or external to an integrated gateway disaster recovery device. In particular embodiments, the memory 502 is a non-volatile solid state memory. The memory may include a read only memory (ROM), a random - access memory (RAM), a magnetic disk storage medium device, an optical storage medium device, a flash memory device, an electrical, optical or any other physical/tangible memory storage device. Thus, generally, the memory includes one or more tangible (non-transitory) computer-readable storage media (for example, memory devices) encoded with software which includes computer-executable instructions, and the software, when executed (for example, by one or more processors), is operable to execute the operations described in the vehicle window position compensation method according to the above embodiments.

The processor 501 reads and executes the computer program instructions stored in the memory 502 to implement the vehicle window position compensation method in any one of the above embodiments.

In an example, the electronic device may further include a communication interface 503 and a bus 510. As shown in Fig. 5, the processor 501, the memory 502, and the communication interface 503 are connected by the bus 510 to communicate with each other.

The communication interface 503 is mainly configured to achieve communication between modules, units, and/or devices in the embodiments of the present disclosure.

The bus 510 includes hardware, software, or both of them, to couple components of the electronic device to each other. By way of example and not limitation, the bus may include an accelerated graphics port (AGP) or other graphics buses, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus, or other suitable buses, or a combination thereof. When appropriate, the bus 510 may include one or more buses. Although specific buses are described and shown in the embodiments of the present disclosure, the present disclosure contemplates any suitable bus or interconnect.

The electronic device may execute the vehicle window position compensation method in the embodiments of the present disclosure, so that the vehicle window position compensation method described in any one of the above embodiments is achieved.

In addition, in conjunction with the vehicle window position compensation method in the above embodiments, embodiments of the present disclosure may provide a readable storage medium for implementation. The readable storage medium stores program instructions, and the program instructions, when executed by the processor, implement the method for compensating a position of a vehicle window in any one of the above embodiments.

In addition, in conjunction with the vehicle window position compensation method in the above embodiments, embodiments of the present disclosure may provide a computer program product, and instructions in the computer program product, when executed by the processor of the electronic device, enable the electronic device to execute any one of the methods for compensating a position of a vehicle window in the above embodiments.

It should be noted that the present disclosure is not limited to the particular configurations and processes described above and shown in the drawings. For the sake of brevity, the detailed description of the known method is omitted here. In the above embodiments, several specific steps are described and shown as examples. However, the processes of the method of the present disclosure are not limited to the specific steps described and shown, and those skilled in the art can make various changes, modifications and additions, or change the sequence of the steps after comprehending the gist of the present disclosure.

The functional modules shown in the structural block diagrams may be implemented as hardware, software, firmware, or a combination thereof. When implemented as hardware, it may be, for example, an electronic circuit, an application specific integrated circuit (ASIC), suitable firmware, a plug-in, a functional card, and the like When implemented as software, an element of the present disclosure is a program or code segment used to perform a desired task. The program or code segment may be stored in a machine-readable medium or transmitted by a data signal carried in a carrier wave over a transmission medium or communication link. The "machine-readable medium" may include any medium capable of storing or transmitting information. An example of the machine-readable medium includes an electronic circuit, a semiconductor memory device, a ROM, a flash memory, an erasable ROM (EROM), a floppy disk, a CD-ROM, an optical disk, a hard disk, a fiber optic medium, a radio frequency (RF) link, and the like. The code segment may be downloaded via a computer network such as the Internet, intranet, and the like.

It should also be noted that, in the exemplary embodiments mentioned in the present disclosure, the methods or systems are described based on a series of steps or apparatuses. However, the present disclosure is not limited to the above order of the steps, that is, the steps may be executed in the order described in the embodiments or in an order different from that in the embodiments, or several steps may be executed at the same time.

The aspects of the present disclosure are described above with reference to the flowcharts and/or block diagrams of the methods, apparatuses (systems), and computer program products according to the embodiments of the present disclosure. It should be understood that each block in the flowcharts and/or block diagrams and combinations of blocks in the flowcharts and/or block diagrams may be implemented by the computer program instructions. These computer program instructions may be provided to a processor of a general purpose computer, a special purpose computer or other programmable data processing apparatuses to produce a machine, so that these instructions which are executed by the processor of the computer or other programmable data processing apparatuses enable the implementation of the functions/actions specified in one or more blocks of the flowcharts and/or block diagrams. Such a processor may be, but is not limited to, a general purpose processor, a special purpose processor, an application specific processor, or a field programmable logic circuit. It may also be understood that each block in the block diagrams and/or flowcharts and the combinations of blocks in the block diagrams and/or flowcharts may also be implemented by special purpose hardware that executes the specified functions or actions or may be implemented by the combinations of the special purpose hardware and the computer instructions.

The above is only specific embodiments of the present disclosure, those skilled in the art may clearly understand that the specific operating processes of the above systems, modules and units may be referred to the corresponding processes in the embodiments of the foregoing method, which is not repeated here for the convenience and brevity of the description. It should be understood that the protection scope of the present disclosure is not limited to this, and any person skilled in the art can easily think of various equivalent modifications or replacements within the technical scope disclosed in the present disclosure, and these modifications or replacements should all be covered within the protection scope of the present disclosure.

**Claims**

1. A vehicle window position compensation method, comprising:

   acquiring a first current and a first rotation speed of a motor controlling a vehicle window movement at the time of de-energization of the motor, a first time period of the motor from the de-energization to a complete stop of rotation of the motor, and a second current of the motor during the first time period;
   calculating a coasting distance of the motor based on the first current, the first rotation speed, the first time period, the second current, and a kinematics model of the motor; and
   obtaining a target position of the vehicle window based on the coasting distance and a first position of the vehicle window at the time of the de-energization of the motor.

2. The vehicle window position compensation method of claim 1, wherein the kinematics model of the motor is represented by a following formula:

$$\begin{cases} J\dfrac{d\omega}{dt} = T_m - T_f \\ T_m = K_t I \end{cases}$$

where J represents a moment of inertia,
$\omega$ represents a rotation speed prior to the de-energization of the motor,
$T_m$ represents a driving torque of the motor,
$T_f$ represents a resistance torque of the motor,
$K_t$ represents a characteristic parameter of the motor, and
I represents a current prior to the de-energization of the motor.

3. The vehicle window position compensation method of claim 1 or 2, wherein the calculating a coasting distance of the motor based on the first current, the first rotation speed, the first time period, the second current, and a kinematics model of the motor comprises:

calculating, based on the first current, the first rotation speed, the first time period, the second current, and the kinematics model of the motor, a second rotation speed in a process from the de-energization to the complete stop of rotation of the motor; and
obtaining, based on the second rotation speed, the coasting distance of the motor.

4. The vehicle window position compensation method of claim 3, wherein the calculating, based on the first current, the first rotation speed, the first time period, the second current, and the kinematics model of the motor, a second rotation speed in a process from the de-energization to the complete stop of rotation of the motor comprises:

calculating, based on the first current, the first rotation speed, the first time period, the second current, and the kinematics model of the motor, the second rotation speed in the process from the de-energization to the complete stop of rotation of the motor according to the following formula:

$$\begin{cases} k = \dfrac{T}{t_s} \\ J\dfrac{\omega_k - \omega_{k-1}}{t_s} = K_t I_k - K_t I_{break} \\ \omega_k = \omega_{k-1} + \dfrac{K_t t_s}{J}\left(I_{zk} - I_{break}\right) \end{cases}$$

where $\omega_k$ represents a second rotation speed corresponding to a k-th one of sampling points in the process from the de-energization to the complete stop of rotation of the motor, k = 1, 2, 3,..., n,
$\omega_{k-1}$ represents a second rotation speed corresponding to a (k-1)-th one of the sampling points in the process from the de-energization to the complete stop of rotation of the motor,
T represents the first time period,
$t_s$ represents a sampling time interval in the first time period,
$I_k$ represents a current corresponding to the k-th one of the sampling points prior to the de-energization of the motor,
$I_{break}$ represents the first current, and
$I_{zk}$ represents the second current at a corresponding sampling moment in the first time period.

5. The vehicle window position compensation method of claim 4, wherein the obtaining, based on the second rotation speed, the coasting distance of the motor comprises:

obtaining, based on the second rotation speed, the coasting distance of the motor according to the following formula:

$$\Delta S_k = \frac{t_s(\omega_k + \omega_{k-1})}{2}$$

$$S_k = \sum_{j=1}^{k} \Delta S_j$$

$$S_k = k t_s \omega_{break} - \frac{t_s{}^2 K_t}{2J} \sum_{j=1}^{k}(2j-1)I_{break} + \frac{t_s{}^2 K_t}{J}\left(\sum_{i=2}^{k}\sum_{j=1}^{i-1} I_{zj} + \frac{\sum_{j=1}^{k} I_{zj}}{2}\right)$$

where $S_k$ represents the coasting distance of the motor,
$\Delta S_k$ represents a coasting distance of the motor between $\omega_k$ and $\omega_{k-1}$, and
$w_{break}$ represents the first rotation speed.

6. The vehicle window position compensation method of any one of claims 1 to 5, wherein the acquiring a first rotation speed of a motor controlling a vehicle window movement at the time of de-energization of the motor comprises:

acquiring a second time period required for the motor controlling the vehicle window movement to rotate once in an operating state; and
calculating, based on the second time period required for the motor to rotate once, the first rotation speed at the time of the de-energization of the motor.

7. The vehicle window position compensation method of any one of claims 1 to 6, wherein the acquiring a first time period of the motor from the de-energization to a complete stop of rotation of the motor comprises:

acquiring a sampling time interval of the motor controlling the vehicle window movement from the de-energization to the complete stop of rotation of the motor, and a number of sampling points sampled in the process from the de-energization of the motor to the complete stop of rotation of the motor; and
calculating, based on the sampling time interval and the number of the sampling points, the first time period of the motor from the de-energization to the complete stop of rotation of the motor.

8. The vehicle window position compensation method of any one of claims 1 to 7, wherein the obtaining a target position of the vehicle window based on the coasting distance and a first position of the vehicle window at the time of the de-energization of the motor comprises:
determining a sum of the first position of the vehicle window at the time of the de-energization of the motor and the coasting distance as the target position of the vehicle window.

9. The vehicle window position compensation method of any one of claims 1 to 8, wherein the acquiring a first current at de-energization of a motor controlling a vehicle window movement comprises:

acquiring a ripple current signal of the motor controlling the vehicle window movement in an operating state;
converting the ripple current signal into a voltage signal;
performing an amplification process on the voltage signal to obtain an amplified voltage signal;
converting the amplified voltage signal into a digital signal;
performing a filtering process on a noise in the digital signal to obtain a filtered digital signal; and
obtaining, based on the filtered digital signal, the first current at the time of de-energization of the motor.

10. A vehicle window compensation apparatus, comprising:

an acquisition module configured to acquire a first current and a first rotation speed of a motor controlling a vehicle window movement at the time of de-energization of the motor, a first time period of the motor from the de-energization to a complete stop of rotation of the motor, and a second current of the motor during the first time period;
a calculation module configured to calculate a coasting distance of the motor based on the first current, the first rotation speed, the first time period, the second current, and a kinematics model of the motor; and
a determination module configured to obtain a target position of the vehicle window based on the coasting distance and a first position of the vehicle window at the time of de-energization of the motor.

11. An electronic device comprising a processor and a memory, the memory storing programs or instructions executable on the processor, and the programs or instructions, when executed by the processor, implementing steps of the vehicle window position compensation method of any one of claims 1 to 9.

12. A readable non-transitory storage medium storing programs or instructions, wherein the programs or instructions, when executed by a processor, implement steps of the vehicle window position compensation method of any one of claims 1 to 9.

13. A computer program product, configured to be executed by at least one processor, to implement steps of the vehicle window position compensation method of any one of claims 1 to 9.

Step 110

acquiring a first current and a first rotation speed of a motor controlling a vehicle window movement at the time of de-energization of the motor, a first time period of the motor from the de-energization to a complete stop of rotation of the motor, and a second current of the motor during the first time period

Step 120

calculating a coasting distance of the motor based on the first current, the first rotation speed, the first time period, the second current, and a kinematics model of the motor;

Step 130

obtaining a target position of the vehicle window based on the coasting distance and a first position of the vehicle window at the time of the de-energization of the motor

**Fig. 1**

Motor → Sampling resistor → Amplifier → AD collection

Ripple current collection

Braking duration acquisition module

Speed calculation module (speed)

Low-pass filtering module (current)

Position extraction module

Braking coasting distance acquisition module

Movement position management module

MCU

**Fig. 2**

Start

Step 310

Monitoring the current and the speed when the motor is operating

Step 320

determining whether the command of the motor triggers a de-energization command

NO

YES

Recording the first current and the first rotation speed of the motor under this condition, and starting the discrete sampling process to record the second current at each discrete sampling moment and the duration of the whole process

Step 330

calculating, based on the first current, the first rotation speed, the first time period, and the second current recorded, and the kinematics model of the motor, the coasting distance, and compensating the first position of the vehicle window

Step 340

End

**Fig. 3**

**Fig. 4**

**Fig. 5**

## INTERNATIONAL SEARCH REPORT

| International application No. |
|---|
| **PCT/CN2023/137816** |

**A. CLASSIFICATION OF SUBJECT MATTER**

E05F15/689(2015.01)i; H02P29/00(2016.01)i; E05F15/697(2015.01)i; E05F15/70(2015.01)i

According to International Patent Classification (IPC) or to both national classification and IPC

**B. FIELDS SEARCHED**

Minimum documentation searched (classification system followed by classification symbols)

IPC: E05F H02P

Documentation searched other than minimum documentation to the extent that such documents are included in the fields searched

Electronic data base consulted during the international search (name of data base and, where practicable, search terms used)

CNABS; CNTXT; CNKI; 万方; WANFANG; 超星读秀; DUXIU; VEN; USTXT; WOTXT; EPTXT: 经纬恒润, 车窗, 位置, 补偿, 转速, 电流, 时间, 电机, 前冲, 距离, 模型, vehicle, window, motor, current, rotation speed, position, model, compensat+

**C. DOCUMENTS CONSIDERED TO BE RELEVANT**

| Category* | Citation of document, with indication, where appropriate, of the relevant passages | Relevant to claim No. |
|---|---|---|
| PX | CN 116950530 A (BEIJING JINGWEI HIRAIN TECHNOLOGIES CO., INC.) 27 October 2023 (2023-10-27) description, paragraphs [0033]-[0151], and figures 1-5 | 1-13 |
| A | CN 111206838 A (MARELLI AUTOMOTIVE ELECTRONICS GUANGZHOU CO., LTD.) 29 May 2020 (2020-05-29) description, paragraphs [0015]-[0017], and figure 1 | 1-13 |
| A | CN 105909115 A (BEIJING JINGWEI HIRAIN TECHNOLOGIES CO., INC.) 31 August 2016 (2016-08-31) description, paragraphs [0046]-[0172], and figures 1-4 | 1-13 |
| A | CN 111706199 A (NANJING TACKING AUTOMOTIVE ELECTRONICS CO., LTD.) 25 September 2020 (2020-09-25) description, paragraphs [0064]-[0085], and figure 1 | 1-13 |
| A | DE 102006049223 A1 (CONTI TEMIC MICROELECTRONIC GMBH) 30 April 2008 (2008-04-30) description, paragraphs [0024]-[0037], and figure 1 | 1-13 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 December 2023** | **18 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/137816**

| Patent document cited in search report | | | Publication date (day/month/year) | Patent family member(s) | | | Publication date (day/month/year) |
|---|---|---|---|---|---|---|---|
| CN | 116950530 | A | 27 October 2023 | None | | | |
| CN | 111206838 | A | 29 May 2020 | None | | | |
| CN | 105909115 | A | 31 August 2016 | CN | 105909115 | B | 16 June 2017 |
| CN | 111706199 | A | 25 September 2020 | CN | 111706199 | B | 17 September 2021 |
| DE | 102006049223 | A1 | 30 April 2008 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310854496